# EUROPÄISCHE PATENTANMELDUNG

(11) **EP 4 112 197 A1**
(43) Veröffentlichungstag der Anmeldung: **04.01.2023**
(21) Anmeldenummer: 22177469.8
(22) Anmeldetag: 07.06.2022
(51) Int. Cl.: B21B 15/00, B21C 47/24, B23K 20/06, B23K 101/16

(54) **BANDVERBINDUNGSVERFAHREN UND BANDVERBINDUNGSVORRICHTUNG FÜR EINE KONTINUIERLICH BETRIEBENE BANDBEHANDLUNGSVORRICHTUNG**

(30) Priorität: 02.07.2021 DE 102021206964
(71) Anmelder: SMS Group GmbH, 40237 Düsseldorf (DE)
(72) Erfinder: Daube, Thomas, 47279 Duisburg (DE); Szonn, Jens, 40591 Düsseldorf (DE); Wilms, Henning, 47239 Duisburg (DE); Kümmel, Lutz, 41363 Jüchen (DE)
(74) Vertreter: Klüppel, Walter

(57) **Zusammenfassung**

Die vorliegende Erfindung betrifft ein Verfahren sowie eine Vorrichtung (1) zum Verbinden eines Endabschnitts (2) eines auslaufenden Metallbandes (3) mit einem Anfangsabschnitt (4) eines einlaufenden Metallbandes (5) in einer kontinuierlich betriebenen Bandbehandlungsanlage, wobei die beiden Abschnitte (2, 4) in einem definierten Abstand zueinander überlappend angeordnet sowie bezüglich ihrer Bandbreitenmittelachsen ausgerichtet werden oder umgekehrt; die beiden Metallbänder (3, 5) sodann positionsfest fixiert werden; und anschließend zumindest ein Flächenbereich (13) der sich überlappenden Abschnitte (2, 4) mittels zumindest einer Spule (12) einer elektromagnetischen Pulsschweißeinrichtung (11) stoffschlüssig miteinander verbunden wird.

## Beschreibung

Die vorliegende Erfindung betrifft ein Verfahren zum Verbinden eines Endabschnitts eines auslaufenden Metallbandes mit einem Anfangsabschnitt eines einlaufenden Metallbandes in einer kontinuierlich betriebenen Bandbehandlungsanlage sowie eine Bandverbindungsvorrichtung, die vorzugsweise zur Durchführung des erfindungsgemäßen Verfahrens geeignet ist. Ferner betrifft die vorliegende Erfindung eine Bandbehandlungsanlage umfassend die Bandverbindungsvorrichtung.

In Bandbehandlungsanlagen werden zu Bunden aufgewickelte Metallbänder in einem Einlaufteil abgewickelt und durchlaufen anschließend eine oder mehrere Behandlungsstationen, bevor sie im Auslaufteil wieder aufgewickelt oder alternativ zu einzelnen Tafeln geschnitten werden. Damit die Metallbänder nicht stets neu eingefädelt werden müssen, wird ein Endabschnitt eines auslaufenden Metallbandes mit einem Anfangsabschnitt eines einlaufenden Metallbandes eines neuen Bundes verbunden.

Zum Verbinden der Metallbänder sind aus dem Stand der Technik diverse Verfahren bekannt. Gemäß der Offenbarung der europäischen Patentschrift EP 2 202 025 B1 können die Metallbänder mittels geeigneter Schweißmaschinen, mittels mechanischer Heftmaschinen oder adhäsiv miteinander verbunden werden.

Die derzeit am häufigsten verwendeten Verfahren sind das Fügen mittels mechanischer Heftmaschinen und das stoffschlüssige Verbinden mittels Laserschweißmaschinen.

Heftmaschinen weisen den Vorteil auf, dass auch Metallbänder aus unterschiedlichen Metallen und/oder Metalllegierungen miteinander verbunden werden können. Allerdings entstehen während des Stanzvorgangs scharfkantige Grate oder kleinere Flitterpartikel, die insbesondere an den Rollen der Prozesslinie einer Bandbehandlungsanlage haften bleiben können und zu einem erhöhten Verschleiß dieser führen. Des Weiteren können die scharfkantigen Grate oder kleineren Flitterpartikel Oberflächendefekte an den behandelnden Metallbändern verursachen.

Da die Metallbänder innerhalb einer Prozesslinie mehrfach umgeformt werden, besteht zudem die Gefahr eines Reißens der gebildeten Heftnaht, die zu einem langen Stillstand der entsprechenden Prozesslinie führen kann.

Weiterhin kann die Fahrweise von Prozesskomponenten im laufenden Prozess, wie Streckrichtern, eingeschränkt sein, weil der Bandzug in einer solchen Sektion kurzzeitig abgesenkt werden muss und somit die Biege- und Korrekturrollen kurzzeitig geöffnet werden müssen. Auch in einer Reinigungs- und/oder Passivierungssektion kann sich eine solche Heftnaht nachteilig auswirken, da diese auf die pneumatisch anstellbaren Abquetschrollen drücken kann.

Mittels der aus dem Stand der Technik bekannten Schweißverfahren, wie beispielsweise dem Laserschweißen, können in der Regel nur Stahlbänder miteinander verbunden werden. Die hierbei gebildeten Schweißnähte müssen aufwendig einer Wärmenachbehandlung unterzogen werden, wodurch Zyklusnebenzeiten erhöht werden.

Eine Verbindung zwischen Metallbändern aus unterschiedlichen Metallen, wie beispielsweise Aluminium und Stahl, ist nur stark eingeschränkt möglich, da die Schweißverbindungen in der Praxis häufig Schwierigkeiten verursachen. Neben einer Spritzerbildung besteht ferner die Gefahr eines Anhaftens der Elektrode an dem Metallband.

Der vorliegenden Erfindung liegt daher die Aufgabe zu Grunde ein gegenüber dem Stand der Technik verbessertes Verfahren zum Verbinden eines Endabschnitts eines auslaufenden Metallbandes mit einem Anfangsabschnitt eines einlaufenden Metallbandes bereitzustellen, insbesondere ein Verfahren bereitzustellen, welches ein gratfreies, sauberes und schnelles Verbinden des Endabschnitts eines auslaufenden Metallbandes mit einem Anfangsabschnitt eines einlaufenden Metallbandes in einer kontinuierlich betriebenen Bandbehandlungsanlage ermöglicht.

In einem weiteren Aspekt ist Aufgabe der vorliegenden Erfindung eine gegenüber dem Stand der Technik verbesserte Bandverbindungsvorrichtung zum Verbinden eines Endabschnitts eines auslaufenden Metallbandes mit einem Anfangsabschnitt eines einlaufenden Metallbandes in einer kontinuierlich betriebenen Bandbehandlungsanlage bereitzustellen.

### Beschreibung der Erfindung

Erfindungsgemäß wird die Aufgabe durch ein Verfahren mit den Merkmalen des Patentanspruchs 1 sowie durch eine Bandverbindungsvorrichtung mit den Merkmalen des Patentanspruchs 8 gelöst.

Gemäß dem erfindungsgemäßen Verfahren zum Verbinden eines Endabschnitts eines auslaufenden Metallbandes mit einem Anfangsabschnitt eines einlaufenden Metallbandes in einer kontinuierlich betriebenen Bandbehandlungsanlage ist vorgesehen, dass die beiden Abschnitte zunächst in einem definierten Abstand zueinander überlappend angeordnet sowie bezüglich ihrer Bandbreitenmittelachsen ausgerichtet werden oder umgekehrt, also dass die beiden Abschnitte zunächst bezüglich ihrer Bandbreitenmittelachsen ausgerichtet und sodann in einem definierten Abstand zueinander überlappend angeordnet werden. Sodann werden die beiden Metallbänder positionsfest fixiert; wobei anschließend zumindest ein Flächenbereich der sich überlappenden Abschnitte mittels zumindest einer Spule einer elektromagnetischen Pulsschweißeinrichtung stoffschlüssig miteinander verbunden wird.

In gleicher Weise betrifft die vorliegende Erfindung zudem eine Bandverbindungsvorrichtung zum Verbinden eines Endabschnitts eines auslaufenden Metallbandes mit einem Anfangsabschnitt eines einlaufenden Metallbandes in einer kontinuierlich betriebenen Bandbehandlungsanlage. Die erfindungsgemäße Bandverbindungsvorrichtung umfasst eine erste Ablagefläche für das einlaufende Metallband sowie eine in Transportrichtung gegenüberliegend angeordnete zweite Ablagefläche für das auslaufende Metallband, wobei zumindest eine der beiden Ablageflächen vertikal, längs und/oder senkrecht zur Transportrichtung verstellbar und/oder entlang zumindest einer dieser Achsen schwenkbar ist, derart, dass die beiden Abschnitte des jeweiligen Metallbandes überlappend zueinander beabstandet anordenbar sind; eine Klemmvorrichtung zum Fixieren der beiden Metallbänder; sowie eine elektromagnetische Pulsschweißeinrichtung mit zumindest einer Spule, über die zumindest ein Flächenbereich der sich überlappenden Abschnitte miteinander stoffschlüssig verbindbar ist.

Das Fügen der beiden Metallbänder mittels der zumindest einen Spule des elektromagnetischen Pulsschweißeinrichtung ermöglicht nicht nur sehr kurze Zykluszeiten von maximal 100 µs, vorzugsweise von maximal 50 µs, die von der Größe der zu bildenden Verbindung unabhängig sind, sondern zudem eine robuste sowie reproduzierbare stoffschlüssige Verbindung zwischen Metallbändern unterschiedlicher Dicken und/oder Breiten ohne die Bildung von Flitterpartikeln und/oder Graten. So kann hierdurch der Verschleiß von in einer Bandbehandlungsanlage verbauten Polyurethan-beschichteten Rollen signifikant reduziert werden. Dies führt in gleicher Weise zu weniger Oberflächenfehlern und somit zu einer höheren Produktqualität bei den innerhalb der Bandbehandlungsanlage behandelten Metallbändern. Da der Verschrottungsanteil hierdurch ebenfalls reduziert werden kann, kann der gesamte Prozess wirtschaftlicher gestaltet werden. Bei artgleichen Metallen tritt zudem kein thermischer Verzug auf.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Die Metallbänder sind vorzugsweise ausgewählt aus der Reihe umfassend Stahlbänder, Aluminiumbänder und/oder Nichteisenmetall-basierte Bänder.

Bei dem stoffschlüssigen Verbinden der beiden Metallbänder mittels des Pulsschweißeinrichtung bzw. der zumindest einen Spule wird die Spule mit einem gepulsten Strom beaufschlagt, der in einem der beiden Metallbänder, dem sog. Flyer, einen gegenläufigen Strom induziert. Hierbei stoßen sich der Spulenstrom und der Werkstückstrom ab, wodurch der Flyer beschleunigt wird und auf das andere Metallband aufschlägt. Die erforderliche Energie für den geplanten Fügeprozess ergibt sich aus der Dicke, der Breite sowie der Streckgrenze der Metallbänder, der Schweißbreite und einem Faktor C, der einen Wert im Bereich von 500 bis 1500 aufweist. Die hierbei erzielte Geschwindigkeit des zu beschleunigenden Materials beträgt bis zu 800 m/s. Bei diesem Aufprall entstehen im Kollisionsbereich extrem hohe mechanische Spannungen und Dehnungen, welche zu einem Abplatzen von Oxidschichten und oberflächlichen Verschmutzungen führen. Aus dem sich schließenden Spalt zwischen beiden Fügepartnern werden die Verschmutzungen herausgetragen und es verbleiben metallisch reine, hoch reaktive Oberflächen. Diese werden unter einem enormen Druck des Aufpralls derart stark aufeinandergepresst, dass sich die Atome beider Fügepartner nahe genug kommen und eine metallische Bindung entsteht.

Um die erforderlichen Zugfestigkeiten zwischen den beiden Metallbändern zu erzielen, weist der zumindest eine Flächenbereich eine Mindestfläche auf, die sich aus der Bandbreite eines der beiden Metallbänder, vorzugsweise dem schmaleren Metallband, und dem zumindest 0.5-fachen der maximalen Banddicke eines der beiden Metallbänder, bevorzugt dem zumindest 1.0-fachen der maximalen Banddicke eines der beiden Metallbänder, mehr bevorzugt dem zumindest 1.5-fachen der maximalen Banddicke eines der beiden Metallbänder, ergibt. Sofern die beiden Metallbänder die gleichen Bandbreiten und/oder die gleichen Banddicken aufweisen, so ergibt sich die Mindestfläche für den zumindest einen Flächenbereich aus der Bandbreite eines der beiden Metallbänder und dem zumindest 0.5-fachen der Banddicke eines der beiden Metallbänder, bevorzugt dem zumindest 1.0-fachen der Banddicke eines der beiden Metallbänder, mehr bevorzugt dem zumindest 1.5-fachen der Banddicke eines der beiden Metallbänder.

Um den Fügeprozess möglichst effizient durchführen zu können, sollte der zumindest eine Flächenbereich eine Maximalfläche nicht überschreiten. Daher weist der zumindest eine Flächenbereich vorzugsweise eine Maximalfläche auf, die sich aus der minimalen Bandbreite eines der beiden Metallbänder und dem höchstens 0.5-fachen der maximalen Bandbreite eines der beiden Metallbänder, mehr bevorzugt maximal dem 0.3-fachen der maximalen Bandbreite eines der beiden Metallbänder, noch mehr bevorzugt maximal dem 0.1-fachen der maximalen Bandbreite eines der beiden Metallbänder, ergibt. Sofern die beiden Metallbänder die gleichen Bandbreiten aufweisen, so ergibt sich die Maximalfläche für den zumindest einen Flächenbereich aus der Bandbreite eines der beiden Metallbänder und dem höchstens 0.5-fachen der Bandbreite eines der beiden Metallbänder, bevorzugt dem 0.3-fachen der Bandbreite eines der beiden Metallbänder, mehr bevorzugt dem 0.1-fachen der Bandbreite eines der beiden Metallbänder.

Vorzugsweise ist vorgesehen, dass der zumindest eine Flächenbereich sich über die gesamte Bandbreite eines der beiden Metallbänder, bevorzugt über die gesamte Bandbreite des schmaleren Metallbandes erstreckt. Vorteilhafterweise sollte in diesem Zusammenhang der übrige, nicht miteinander stoffschlüssig verbundene, Flächenbereich der sich überlappenden Abschnitte eine Maximalfläche nicht überschreiten. Daher weist der übrige, nicht miteinander stoffschlüssig verbundene, Flächenbereich der sich überlappenden Abschnitte eine Maximalfläche auf, die sich aus der Bandbreite eines der beiden Metallbänder, vorzugsweise dem schmaleren Metallband, und dem höchstens 30-fachen der maximalen Banddicke eines der beiden Metallbänder, bevorzugt dem höchstens 25-fachen der maximalen Banddicke eines der beiden Metallbänder, mehr bevorzugt dem höchstens 20-fachen der maximalen Banddicke eines der beiden Metallbänder, ergibt.

In einer vorteilhaften Ausführungsvariante werden die sich überlappenden Abschnitte der beiden Metallbänder mittels der zumindest einen Spule der elektromagnetischen Pulsschweißeinrichtung über zumindest zwei einzelne Flächenbereiche, mehr bevorzugt über eine Mehrzahl von einzelnen Flächenbereichen, stoffschlüssig miteinander verbunden. Hierzu umfasst die Bandverbindungsvorrichtung zumindest eine Spule, die vorzugsweise vertikal und/oder senkrecht zur Transportrichtung der Metallbänder verstellbar ist.

Die jeweiligen Flächenbereiche der sich überlappenden Abschnitte können in einer alternativen Ausführungsvariante auch über separate Spulen stoffschlüssig miteinander verbunden werden. Daher kann die Bandverbindungsvorrichtung vorzugsweise eine elektromagnetische Pulsschweißeinrichtung umfassen, die zumindest zwei, mehr bevorzugt eine Mehrzahl von Spulen umfasst, die jeweils senkrecht zur Transportrichtung der Metallbänder nebeneinander angeordnet sind. Auch diese Spulen können vertikal und/oder senkrecht zur Transportrichtung der Metallbänder verstellbar sein und ermöglichen hierdurch eine größere Flexibilität bei der Bildung des geplanten Fügeprozesses.

In einer weiteren vorteilhaften Ausführungsvariante werden die beiden überlappenden Abschnitte mittels der zumindest einen Spule der elektromagnetischen Pulsschweißeinrichtung vollflächig miteinander verbunden. In diesem Zusammenhang ist bevorzugt vorgesehen, dass die axiale Erstreckung der vollflächigen Überlappung mindestens dem 0.5-fachen der maximalen Banddicke, mehr bevorzugt mindestens dem 1.0-fachen der maximalen Banddicke, noch mehr bevorzugt mindestens dem 1.5-fachen der maximalen Banddicke, eines der beiden Metallbändern entspricht. Sofern die beiden Metallbänder die gleichen Banddicken aufweisen, so entspricht die axiale Erstreckung der vollflächigen Überlappung mindestens dem 0.5-fachen der Banddicke, mehr bevorzugt mindestens dem 1.0-fachen der Banddicke, noch mehr bevorzugt mindestens dem 1.5-fachen der Banddicke, eines der beiden Metallbänder.

In einer besonders vorteilhaften Ausführungsvariante ist vorgesehen, dass die axiale Erstreckung der vollflächigen Überlappung bis zu einer Länge von 350 mm maximal dem 0.5-fachen der maximalen Bandbreite eines der beiden Metallbänder, bevorzugt maximal dem 0.3-fachen der maximalen Bandbreite eines der beiden Metallbänder, mehr bevorzugt maximal dem 0.1-fachen der maximalen Bandbreite eines der beiden Metallbänder, entspricht. Für den Fall, dass die beiden Metallbänder die gleiche Bandbreite aufweisen, so entspricht die axiale Erstreckung der vollflächigen Überlappung bis zu einer Länge von 350 mm maximal dem 0.5-fachen der Bandbreite eines der beiden Metallbänder, bevorzugt maximal dem 0.3-fachen der Bandbreite eines der beiden Metallbänder, mehr bevorzugt maximal dem 0.1-fachen der Bandbreite eines der beiden Metallbänder.

Damit der zu beschleunigende Abschnitt des Metallbandes, der sog. Flyer, die für den Fügeprozess erforderliche Aufprallgeschwindigkeit erfährt, sollte der vertikale Abstand zwischen den beiden Abschnitten 100 µm bis 3000 µm, bevorzugt 200 µm bis 2000 µm, noch mehr bevorzugt 300 µm bis 1500 µm betragen. Besonders bevorzugt ist in diesem Zusammenhang vorgesehen, dass der Kollisionswinkel maximal 40° beträgt.

Um einen solchen Abstand zwischen den beiden Abschnitten zu gewährleisten, können ggf. zusätzliche Sicken vor dem Ausrichten in das jeweilige Metallband eingeprägt werden. Diese können beispielsweise mit einem zusätzlichen Stanzwerkzeug oder vorteilhafterweise während eines Trimmprozesses erzeugt werden.

Die Pulsschweißeinrichtung der erfindungsgemäßen Bandverbindungsvorrichtung umfasst neben der zumindest einen Spule eine elektrische Energiequelle, wie eine Kondensatorbank, sowie einen Gegenhalter, über den das jeweils nicht beschleunigte Metallband, das sog. Target, während des Fügeprozesses abstützbar ist. Die zumindest eine Spule kann daher oberhalb eines Endabschnittes der ersten Ablagefläche angeordnet sein, wobei diese hierbei die Funktion des Gegenhalters erfüllt.

In einer alternativen Ausführungsvariante kann die zumindest eine Spule oberhalb oder unterhalb einer Transportebene des Metallbandes in einem zwischen den beiden Ablageflächen angeordneten Raum positioniert sein. Der Gegenhalter ist sodann unterhalb oder oberhalb der Transportebene und in einer Flucht zu der zumindest einen Spule angeordnet.

Die zumindest eine Spule und/oder der entsprechende Gegenhalter kann stationär innerhalb der Bandverbindungsvorrichtung angeordnet sein und sich über einen quer zur Transportrichtung erstreckenden Abschnitt oder über die gesamte Bandbreite erstrecken. Vorzugsweise ist jedoch vorgesehen, dass die zumindest eine Spule und/oder der entsprechende Gegenhalter vertikal und/oder senkrecht zur Transportrichtung verstellbar, insbesondere verfahrbar sind. So kann der Fügeprozess beispielsweise in beliebig viele Segmente unterteilt werden.

In einer weiteren bevorzugten Ausführungsvariante umfasst die elektromagnetische Pulsschweißeinrichtung zumindest zwei, mehr bevorzugt eine Mehrzahl von Spulen, die senkrecht zur Transportrichtung nebeneinander angeordnet sind. Diese können ebenfalls vertikal und/oder senkrecht zur Transportrichtung verstellbar, insbesondere verfahrbar ausgeführt sein. Die sequentielle Anordnung erlaubt eine größere Flexibilität, da durch ein selektives Zu- und Abschalten der einzelnen Spulen unterschiedliche breite Metallbänder über ihre gesamte Bandbreite miteinander verbindbar sind.

Da nicht immer gewährleistet werden kann, dass bei dem vorliegenden Fügeprozess eine gleichmäßige und eine sich über die gesamte Bandbreite erstreckende Verbindung entsteht, besteht insbesondere an den Bandkanten die Gefahr einer Rissbildung. Um dies zu verhindern, ist vorteilhafterweise vorgesehen, dass die Bandkanten während oder nach dem Fügeprozesses ausgestanzt werden. Dies kann innerhalb der Bandverbindungsvorrichtung über die Pulsschweißeinrichtung direkt oder mit einer klassischen Stanzeinrichtung durchgeführt werden.

Die Klemmvorrichtung kann als Vakuumeinrichtung, Magneteinrichtung, als Niederhalter und/oder als Klemmbackenvorrichtung ausgebildet sein.

In einem weiteren Aspekt betrifft die vorliegende Erfindung zudem eine Bandbehandlungsanlage, umfassend zumindest eine in einer Einlaufsektion angeordnete erfindungsgemäße Bandverbindungsvorrichtung.

### Figurenbeschreibung

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1: eine erste Ausführungsvariante der erfindungsgemäßen Bandverbindungsvorrichtung,
- Fig. 2: eine zweite Ausführungsvariante der erfindungsgemäßen Bandverbindungsvorrichtung,
- Fig. 3 bis 5: unterschiedliche Ausführungsvarianten einer sequentiellen Spulenanordnung,
- Fig. 6: eine Aufnahme einer stoffschlüssigen Verbindung zwischen zwei Aluminiumbändern.

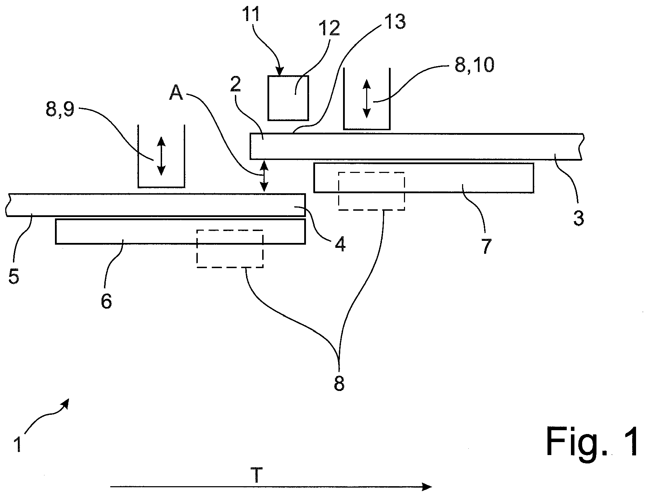

In Figur 1 ist eine erste Ausführungsvariante der erfindungsgemäßen Bandverbindungsvorrichtung 1 gezeigt, mit der ein Endabschnitt 2 eines auslaufenden Metallbandes 3, beispielsweise ein beschichtetes Aluminiumband, mit einem Anfangsabschnitt 4 eines einlaufenden Metallbandes 5, das beispielhaft ebenfalls ein Aluminiumband sein kann, verbindbar ist. Eine solche Bandverbindungsvorrichtung 1 ist für eine kontinuierlich betriebene Bandbehandlungsanlage (nicht dargestellt) vorgesehen, wo diese beispielsweise in einer Einlaufsektion angeordnet sein kann.

Die Bandverbindungsvorrichtung 1 umfasst in der ersten Ausführungsvariante eine erste Ablagefläche 6, beispielsweise einen Tisch, für das einlaufende Metallband 5 sowie eine in Transportrichtung gegenüberliegend angeordnete zweiten Ablagefläche 7, beispielsweise einen Tisch, für das auslaufende Metallband 3, die vorliegend über einen nicht dargestellten Stellantrieb höhenverstellbar ausgeführt ist, derart, dass die beiden Abschnitte 2, 4 der Metallbänder 3, 5 in einem definierten vertikalen Abstand A überlappend angeordnet werden können.

Ferner umfasst die Bandverbindungsvorrichtung 1 eine Klemmvorrichtung 8 zum Fixieren der beiden Metallbänder 3, 5, sobald sich diese in einer für den geplanten Verbindungsprozess vorgesehenen Position befinden. Hierzu werden die beiden Abschnitte 2, 4 zunächst in einem definierten Abstand zueinander überlappend angeordnet sowie bezüglich ihrer Bandbreitenmittelachsen ausgerichtet. Anschließend werden die beiden Metallbänder 3, 5 mittels der Klemmvorrichtung 8 positionsfest fixiert. Hierzu umfasst die Klemmvorrichtung 8 in der vorliegend dargestellten Ausführungsvariante einen ersten Niederhalter 9 mit dem das ausgerichtete Metallband 5 positionsfest fixiert werden kann, sowie einen zweiten Niederhalter 10 mit dem das ausgerichtete Metallband 3 positionsfest fixiert werden kann. Alternativ kann die Klemmvorrichtung 8 aus einer Vakuumeinrichtung oder einer Magneteinrichtung ausgebildet sein, die in der jeweiligen Ablagefläche bzw. dem jeweiligen Tisch 6, 7 angeordnet ist (vorliegend über die gestrichelte Darstellung angedeutet).

Des Weiteren umfasst die Bandverbindungsvorrichtung 1 eine elektromagnetische Pulsschweißeinrichtung 11 mit einer stationär angeordneten Spule 12, über die zumindest ein Flächenbereich 13 der sich überlappenden Abschnitte 2, 4 stoffschlüssig miteinander verbindbar ist. In der vorliegend dargestellten Ausführungsvariante ist die Spule 12 oberhalb des Endabschnittes der ersten Ablagefläche 6 positioniert. Zur Durchführung des Fügeprozesses zwischen den beiden Abschnitten 2, 4 wird die Spule 12 mit einem gepulsten Strom beaufschlagt, der in dem auslaufenden Metallband 3 einen gegenläufigen Strom induziert. Hierdurch wird der Endabschnitt 2 gezielt in Richtung des Anfangsabschnittes 4 des fixierten Metallbandes 5 beschleunigt, derart, dass bei diesem Aufprall eine metallische Bindung entsteht.

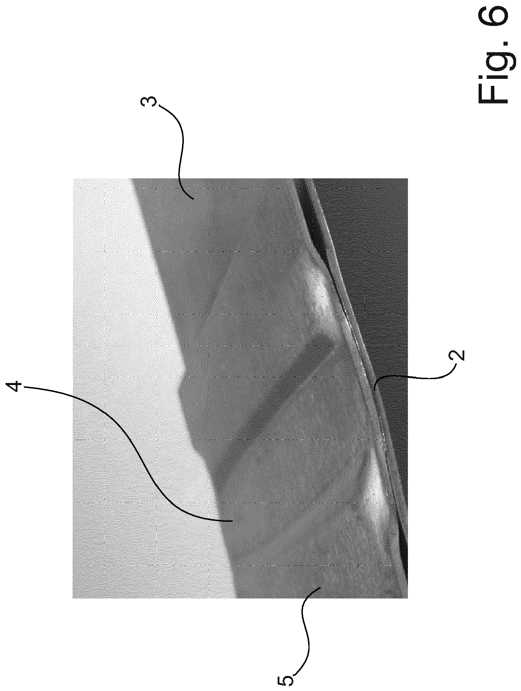

In Figur 6 ist beispielhaft eine Aufnahme eines solchen Fügeprozesses dargestellt. Hierzu wurden zwei Aluminiumstreifen mit einer Dicke von jeweils 500 µm in einer erfindungsgemäßen Bandverbindungsvorrichtung 1 miteinander verbunden. Der verwendete Pulsgenerator (BlueWave PS64-16) hat eine maximale Ladespannung von 16 kV und eine maximale Ladeenergie von 64 kJ. Die Spule (BS100-15) hat einen wirksamen Längenbereich von 100 mm und eine Leiterbreite von 15 mm. Für die Schweißung wurde ein Spitzenstrom von 384 kA und eine Ladeenergie von 14 kJ genutzt. Der Abstand zwischen beiden Aluminiumstreifen betrug 1 mm, die Überlappung hatte eine axiale Erstreckung von ca. 15 mm. Die Probe wies eine Zugfestigkeit (Rm) von 186,25 MPa.

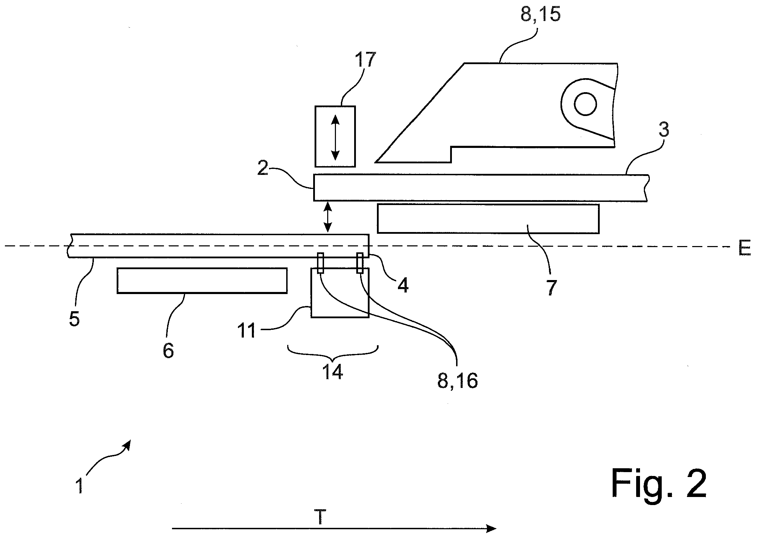

In Figur 2 ist eine zweite Ausführungsvariante der erfindungsgemäßen Bandverbindungsvorrichtung 1 gezeigt. Im Unterschied zu der in Figur 1 gezeigten Ausführungsvariante sind die beiden Ablageflächen 6, 7 in axialer Richtung voneinander beabstandet angeordnet, derart, dass zwischen beiden Ablageflächen 6, 7 ein Raum 14 vorgesehen ist, in dem unterhalb der Transportebene E des Metallbandes 3, 5 die Spule 12 angeordnet ist. Die Klemmvorrichtung 8, mit der die beiden Metallbänder 3, 5 in ihrer für den geplanten Verbindungsprozess vorgesehenen Position fixiert werden, umfasst eine Klemmbackenvorrichtung 15 zum Fixieren des Metallbandes 3 sowie eine Vakuumeinrichtung 16 zum Fixieren des Anfangsabschnitts 4, der von der Spule 12 vertikal beschleunigt wird. Wie weiterhin anhand der Darstellung in Figur 2 erkennbar, umfasst die vorliegende Ausführungsvariante zudem einen Gegenhalter 17, über den der Abschnitt 2 des Metallbandes 3 während des Fügeprozesses abgestützt werden kann. Der Gegenhalter 17 ist hierbei höhenverstellbar ausgebildet. In einer alternativen Ausgestaltung können die Positionen der Spule 12 als auch des Gegenhalters 17 getauscht sein. Mit anderen Worten ist sodann der Gegenhalter 17, der die Vakuumeinrichtung 16 umfasst, in dem Raum 14 zwischen den beiden Ablageflächen 6, 7 unterhalb der Transportebene E angeordnet. Die Spule 12 hingegen ist oberhalb der Transportebene E, insbesondere oberhalb des Endabschnitts 2 des Metallbandes 3 angeordnet.

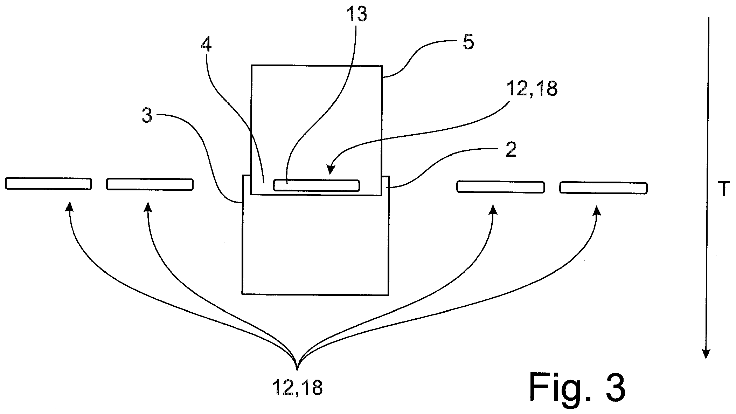

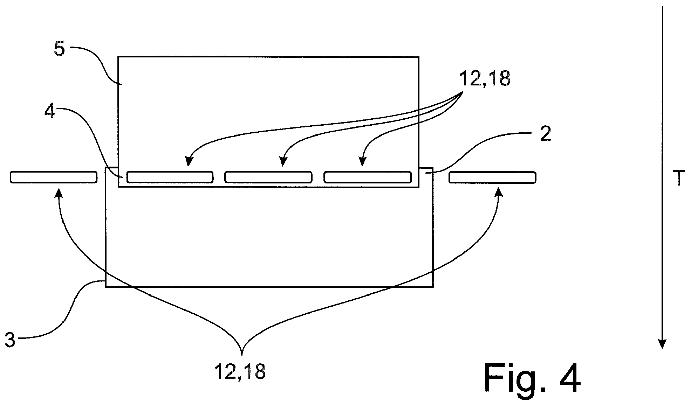

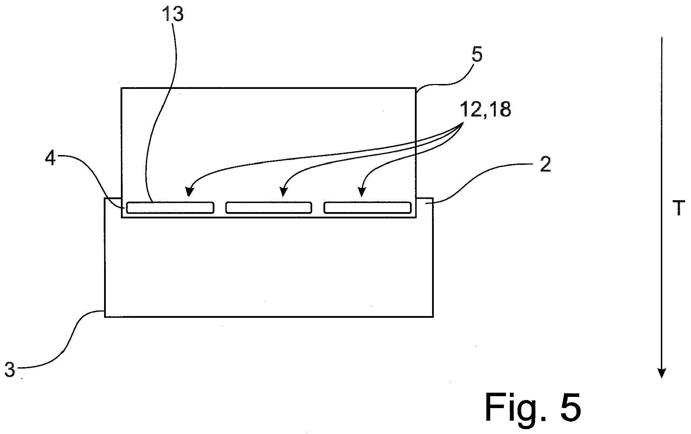

In den Figuren 3 bis 5 sind mehrere Ausführungsvarianten einer sequentiellen Spulenanordnung 18 dargestellt, die vorliegend aus fünf bzw. drei einzelnen selektiv zu- und abschaltbaren Spulen 12 gebildet ist. Die in den Figuren 3 und 4 dargestellten Spulen 12 sind quer zur Transportrichtung (T) des Metallbandes 3, 5 verstellbar ausgebildet. Die in Figur 5 dargestellten Spulen 12 sind hingegen stationär angeordnet.

Figur 3 zeigt eine beispielhafte Anordnung eines auslaufenden Metallbandes 3, dessen Endabschnitt 2 von einem Anfangsabschnitt 4 eines einlaufenden Metallbandes 5 überlappt wird. Wie der Darstellung zu entnehmen ist, weist das einlaufende Metallband 5 eine kleinere Breite als das auslaufende Metallband 3 auf, die beispielsweise 900 mm betragen kann. Von den insgesamt fünf Spulen 12 der Spulenanordnung 18 wird eine Spule 12 für den Fügeprozess eingesetzt, mittels derer lediglich ein Flächenbereich 13 der sich überlappenden Abschnitte 2, 4 stoffschlüssig miteinander verbunden wird.

Figur 4 zeigt eine weitere beispielhafte Anordnung eines auslaufenden Metallbandes 3, dessen Endabschnitt 2 von einem Anfangsabschnitt 4 eines einlaufenden Metallbandes 5 überlappt wird. Auch hierbei weist das einlaufende Metallband 5 eine kleinere Breite als das auslaufende Metallband 3 auf, die beispielsweise 1800 mm betragen kann. Von den insgesamt fünf Spulen 12 der Spulenanordnung 18 sind drei Spulen 12 zugeschaltet, mittels derer die überlappenden Abschnitte 2, 4 nahezu über die gesamte Bandbreite stoffschlüssig miteinander verbunden werden.

Eine weitere beispielhafte Anordnung ist in Figur 5 gezeigt, wobei das auslaufende Metallband 3 beispielsweise eine Breite von 2400 mm betragen kann. In dieser Ausführungsvariante wird die sequentielle Spulenanordnung 18 aus drei einzelnen selektiv zu- und abschaltbaren Spulen 12 gebildet, wobei alle Spulen 12 der Spulenanordnung 18 zugeschaltet sind, mittels derer die überlappenden Abschnitte 2, 4 nahezu über die gesamte Bandbreite stoffschlüssig miteinander verbunden werden.

### Bezugszeichenliste

- 1: Bandverbindungsvorrichtung
- 2: Endabschnitt
- 3: auslaufende Metallband
- 4: Anfangsabschnitt
- 5: einlaufende Metallband
- 6: erste Ablagefläche / Tisch
- 7: zweite Ablagefläche / Tisch
- 8: Klemmvorrichtung
- 9: ersten Niederhalter
- 10: zweiten Niederhalter
- 11: Pulsschweißeinrichtung
- 12: Spule
- 13: Flächenbereich
- 14: Raum
- 15: Klemmbackenvorrichtung
- 16: Vakuumeinrichtung
- 17: Gegenhalter
- 18: Spulenanordnung
- A: Abstand
- T: Transportrichtung
- E: Transportebene

## Patentansprüche

1. Verfahren zum Verbinden eines Endabschnitts (2) eines auslaufenden Metallbandes (3) mit einem Anfangsabschnitt (4) eines einlaufenden Metallbandes (5) in einer kontinuierlich betriebenen Bandbehandlungsanlage, wobei die beiden Abschnitte (2, 4) in einem definierten Abstand zueinander überlappend angeordnet sowie bezüglich ihrer Bandbreitenmittelachsen ausgerichtet werden oder umgekehrt; die beiden Metallbänder (3, 5) sodann positionsfest fixiert werden; und anschließend zumindest ein Flächenbereich (13) der sich überlappenden Abschnitte (2, 4) mittels zumindest einer Spule (12) einer elektromagnetischen Pulsschweißeinrichtung (11) stoffschlüssig miteinander verbunden wird.

2. Verfahren nach Anspruch 1, wobei der zumindest eine Flächenbereich (13) eine Mindestfläche aufweist, die sich aus der Bandbreite eines der beiden Metallbänder (3, 5), vorzugsweise dem schmaleren Metallband (3, 5), und dem zumindest 0.5-fachen der maximalen Banddicke eines der beiden Metallbänder (3, 5) ergibt.

3. Verfahren nach Anspruch 1 oder 2, wobei der zumindest eine Flächenbereich (13) eine Maximalfläche aufweist, die sich aus der minimalen Bandbreite eines der beiden Metallbänder (3, 5) und dem höchstens 0.5-fachen der maximalen Bandbreite eines der beiden Metallbänder (3, 5) ergibt.

4. Verfahren nach Anspruch 1, wobei die beiden überlappenden Abschnitte (2, 4) mittels der zumindest einen Spule (12) der elektromagnetischen Pulsschweißeinrichtung (11) vollflächig miteinander verbunden werden.

5. Verfahren nach Anspruch 4, wobei die axiale Erstreckung der vollflächigen Überlappung mindestens dem 0.5-fachen der maximalen Banddicke, vorzugsweise mindestens dem 1.0-fachen der maximalen Banddicke, mehr bevorzugt mindestens dem 1.5-fachen der maximalen Banddicke, eines der beiden Metallbänder (3, 5) entspricht.

6. Verfahren nach Anspruch 4 oder 5, wobei die axiale Erstreckung der vollflächigen Überlappung bis zu einer Länge von 350 mm maximal dem 0.5-fachen der maximalen Bandbreite eines der beiden Metallbänder (3, 5), vorzugsweise maximal dem 0.3-fachen der maximalen Bandbreite eines der beiden Metallbänder (3, 5), mehr bevorzugt maximal dem 0.1-fachen der maximalen Bandbreite eines der beiden Metallbänder (3, 5), entspricht.

7. Verfahren nach einem der vorhergehenden Ansprüche, wobei die beiden Abschnitte (2, 4) in einem vertikalen Abstand von 100 µm bis 3000 µm, bevorzugt in einem vertikalen Abstand von 200 µm bis 2000 µm, mehr bevorzugt in einem vertikalen Abstand von 300 µm bis 1500 µm, zueinander überlappend vor dem stoffschlüssigen Verbinden angeordnet werden.

8. Bandverbindungsvorrichtung (1) zum Verbinden eines Endabschnitts (2) eines auslaufenden Metallbandes (3) mit einem Anfangsabschnitt (4) eines einlaufenden Metallbandes (5) in einer kontinuierlich betriebenen Bandbehandlungsanlage, umfassend eine erste Ablagefläche (6) für das einlaufende Metallband (5) sowie eine in Transportrichtung gegenüberliegend angeordneten zweite Ablagefläche (7) für das auslaufende Metallband (3), wobei zumindest eine der beiden Ablageflächen (6, 7) vertikal, längs und/oder senkrecht zur Transportrichtung (T) verstellbar, und/oder entlang zumindest einer dieser Achsen schwenkbar ist, derart, dass die beiden Abschnitte (2, 4) des jeweiligen Metallbandes (3, 5) überlappend zueinander beabstandet anordenbar sind; eine Klemmvorrichtung (8) zum Fixieren der beiden Metallbänder (3, 5); sowie eine elektromagnetische Pulsschweißeinrichtung (11) mit zumindest einer Spule (12), über die zumindest ein Flächenbereich (13) der sich überlappenden Abschnitte (2, 4) miteinander stoffschlüssig verbindbar ist.

9. Bandverbindungsvorrichtung (1) nach Anspruch 8, wobei die zumindest eine Spule (12) vertikal und/oder senkrecht zur Transportrichtung (T) verstellbar ist.

10. Bandverbindungsvorrichtung (1) nach Anspruch 8 oder 9, wobei die elektromagnetische Pulsschweißeinrichtung (11) zumindest zwei, vorzugsweise eine Mehrzahl von Spulen (12) umfasst, die senkrecht zur Transportrichtung (T) nebeneinander angeordnet sind.

11. Bandverbindungsvorrichtung (1) nach einem der vorhergehenden Ansprüche 8 bis 10, wobei die Klemmvorrichtung (8) als Vakuumeinrichtung (16), als Magneteinrichtung (20), als Niederhalter (9, 10) und/oder als Klemmbackenvorrichtung (15) ausgebildet ist.

12. Bandbehandlungsanlage, umfassend eine in einer Einlaufsektion angeordnete Bandverbindungsvorrichtung (1) nach einem der vorhergehenden Ansprüche 8 bis 11.
